# FASCICULE DE BREVET EUROPEEN

(11) **EP 1 943 447 B1**
(45) Date de publication et mention de la délivrance du brevet: **02.12.2009**
(21) Numéro de dépôt: 06807721.3
(22) Date de dépôt: 02.11.2006
(51) Int. Cl.: F16K 11/085

(54) **VANNE DE COMMANDE À ÉTANCHÉITÉ AMÉLIORÉE POUR CIRCUIT DE CIRCULATION DE FLUIDE**
VERBESSERTES ABGEDICHTETES STEUERVENTIL FÜR EINEN FLUIDSTROMKREIS
IMPROVED SEALED CONTROL VALVE FOR A FLUID FLOW CIRCUIT

(30) Priorité: 04.11.2005 FR 0511273
(43) Date de publication de la demande: 16.07.2008
(73) Titulaire: VALEO SYSTEMES THERMIQUES, 78321 Le Mesnil St Denis Cedex (FR)
(72) Inventeur: VACCA, Frédéric, F-78910 Behoust (FR); DURUPT, Christian, F-91460 Marcousis (FR)
(86) Numéro de dépôt international: PCT/EP2006/068048
(87) Numéro de publication internationale: WO 2007/051825

(56) Documents cités:
- EP-A- 1 156 243
- FR-A- 2 849 485
- FR-A- 2 870 313
- US-A- 5 871 032

## Description

### Domaine technique

L'invention concerne une vanne de commande destinée à un circuit de circulation de fluide, notamment à un circuit de refroidissement d'un moteur thermique de véhicule automobile.

### Art antérieur

La vanne de l'invention est du type comprenant un corps qui est muni d'une entrée de fluide et d'au moins deux sorties de fluide et qui délimite un logement de révolution pour un organe de réglage propre à tourner autour d'un axe de rotation et à prendre différentes positions angulaires pour contrôler la distribution du fluide au travers des sorties. Le corps comprend une paroi de fond dans laquelle débouche l'entrée de fluide et une paroi latérale dans laquelle débouchent les sorties de fluide. L'organe de réglage est entouré d'un segment d'étanchéité en forme d'anneau ouvert, qui est solidaire en rotation de l'organe de réglage et qui est agencé avec un faible jeu autour de l'organe de réglage, ce qui permet au segment d'étanchéité d'être plaqué intérieurement contre la paroi latérale en vue d'assurer une étanchéité sous l'action de la pression du fluide.

Une telle vanne peut être qualifiée de "vanne rotative", dans la mesure où son organe de réglage tourne autour d'un axe de rotation. Dans une vanne de ce type, la paroi latérale délimite le plus souvent un logement cylindrique propre à recevoir l'organe de réglage qui présente une forme cylindrique homologue.

Le fluide qui pénètre dans le corps de vanne par l'entrée de fluide est distribué entre les sorties de fluide, en fonction de la position angulaire de l'organe de réglage. Dans une vanne de commande de ce type, il est nécessaire d'assurer une étanchéité entre l'organe de réglage et la paroi latérale du corps de vanne. Cette étanchéité vise à empêcher toute fuite accidentelle de fluide vers une sortie, lorsque cette sortie doit être obturée par l'organe de réglage. Différentes solutions ont déjà été proposées pour assurer une telle étanchéité.

La demande de brevet français publiée sous le numéro FR 2 849 485 décrit un exemple de réalisation d'une vanne rotative dans laquelle un segment d'étanchéité agencé entre l'organe de réglage et la paroi latérale du corps de vanne assure l'étanchéité.

### Résumé de l'invention

L'invention vise en particulier à procurer une vanne de commande du type décrit dans laquelle les frottements entre l'organe de réglage et le corps de vanne sont diminués, tout en garantissant une étanchéité entre eux. Ceci permet notamment d'éviter un surdimensionnement du moyen servant à entraîner l'organe de réglage en rotation à l'intérieur du corps de vanne.

Selon un premier aspect, l'invention propose une vanne de commande pour un circuit de circulation de fluide. La vanne de commande comprend un corps qui est muni d'une entrée de fluide et d'au moins deux sorties de fluide et qui délimite un logement de révolution pour un organe de réglage propre à tourner autour d'un axe de rotation et à prendre différentes positions angulaires pour contrôler la distribution du fluide au travers des sorties. Le corps comprend une paroi latérale présentant en développé une longueur donnée.

Conformément à l'invention, la paroi latérale et/ou l'organe de réglage comprend des zones évidées et des zones non-évidées, les zones évidées permettant de réduire une surface de l'organe de réglage en contact avec la paroi latérale et au moins une zone non-évidée étant présente sur toute la longueur dudit développé.

Selon un mode préférentiel de réalisation de l'invention, l'organe de réglage est constitué de 2 parties. Une des deux parties est un segment d'étanchéité en forme d'anneau ouvert, qui a une surface intérieure et une surface extérieure, qui est solidaire en rotation de l'organe de réglage et qui est agencé avec un faible jeu (j) autour de l'organe de réglage. Ceci permet au segment d'étanchéité d'être plaqué intérieurement contre la paroi latérale en vue d'assurer une étanchéité sous l'action de la pression du fluide.

Selon un mode préférentiel de réalisation de l'invention, les zones évidées (EV) et les zones non-évidées (CR) sont situées sur une face interne de la paroi latérale.

Selon un mode préférentiel de réalisation de l'invention, une zone non-évidée de la paroi latérale en contact avec la surface du segment d'étanchéité est couverte d'un film en matière à faible coefficient de frottement. Il peut s'agir en particulier d'une matière choisie parmi le groupe comprenant les polyamides, le polytétrafluoréthylène, le polytetrafluoroéthylène avec charge de Molybdène, l'epoxy phénolique avec charge de polytetrafluoroéthylène et graphite et le polyamide imide avec charge de polytetrafluoroéthylène.

Selon encore un mode préférentiel de réalisation de l'invention, une zone non-évidée de la paroi latérale en contact avec la surface du segment d'étanchéité est pourvue d'un micro bosselage permettant une installation d'un film de fluide entre le segment d'étanchéité et la zone de la paroi latérale en contact avec la surface du segment d'étanchéité.

Selon encore un mode préférentiel de réalisation de l'invention, les sorties de fluide pratiquées dans la paroi latérale sont délimitées par des zones non-évidées.

Selon encore un mode préférentiel de réalisation de l'invention, l'organe de réglage et le segment d'étanchéité comportent des reliefs de forme conjuguée pour permettre leur solidarisation en rotation.

Dans encore un mode préférentiel de réalisation de l'invention, la paroi latérale du corps de vanne délimite un logement cylindrique et la surface extérieure du segment d'étanchéité est une surface extérieure cylindrique.

Dans encore un mode préférentiel de réalisation de l'invention, l'entrée de fluide débouche axialement dans une paroi de fond dudit corps de vanne, tandis que les sorties de fluide débouchent radialement dans la paroi latérale du corps de vanne.

Dans encore un mode préférentiel de réalisation de l'invention, les zones évidées forment des zones de forme sensiblement rectangulaire.

Dans encore un mode préférentiel de réalisation de l'invention, deux portions de la surface extérieure du segment d'étanchéité sont positionnées au dessus de zones non-évidées de la paroi latérale, chaque portion constituant une délimitation du segment d'étanchéité, et les portions se trouvant localisées respectivement à des bords opposés du segment d'étanchéité.

Sous un autre aspect, l'invention concerne un circuit de circulation de fluide comprenant une vanne de commande telle que définie précédemment, dont l'entrée de fluide est reliée à une source de fluide et dont les sorties de fluide sont reliées respectivement à des branches du circuit.

Un tel circuit est avantageusement réalisé sous la forme d'un circuit de refroidissement d'un moteur thermique de véhicule automobile, qui est parcouru par un fluide de refroidissement sous l'action d'une pompe de circulation.

La vanne de commande constitue alors avantageusement une vanne à trois voies, dont l'entrée de fluide est reliée à une arrivée de fluide de refroidissement en provenance du moteur, et dont les trois sorties de fluide sont reliées respectivement à une première branche du circuit qui contient un radiateur de refroidissement, à une deuxième branche du circuit qui constitue une dérivation du radiateur de refroidissement, et à une troisième branche du circuit qui contient un aérotherme pour le chauffage de l'habitacle.

### Brève description des figures

Dans la description qui suit, faite seulement à titre d'exemple, on se réfère aux dessins annexés, sur lesquels:
- la figure 1 est une vue en perspective d'une vanne de commande, du type à trois voies, selon un exemple de forme de réalisation de l'invention;
- la figure 2 est une vue en coupe de la vanne de commande de la figure 1, le plan de coupe contenant l'axe de rotation de l'organe de réglage;
- la figure 3 est une vue en coupé correspondante de l'organe de réglage et du segment d'étanchéité dont il est muni;
- la figure 4 est une vue schématique en coupe de la vanne de commande des figures 1 et 2, le plan de coupe étant perpendiculaire à l'axe de rotation de l'organe de réglage;
- la figure 5 est une vue en perspective du segment d'étanchéité;
- la figure 6 est une vue en coupe transversale du segment d'étanchéité de la figure 5;
- la figure 7 est un détail à échelle agrandie de la figure 6;
- la figure 8 représente la surface développée du segment d'étanchéité;
- la figure 9A représente la surface interne de la paroi latérale de la vanne de commande de la figure 1 en forme développée sur laquelle est représentée la surface de la figure 8;
- la figure 9B est une vue en coupe de la paroi interne de la figure 9A, le plan de coupe passant par l'axe AA;
- la figure 9C représente un détail agrandi de la figure 9B dans un exemple de réalisation de l'invention;
- la figure 9D représente un détail agrandi de la figure 9B dans un exemple de réalisation de l'invention; et
- la figure 10 représente un circuit de refroidissement d'un moteur thermique de véhicule automobile, équipé d'une vanne de commande selon l'invention.

### Description d'exemples de modes de réalisation

Dans les solutions de vannes de commande connues de l'art antérieur, le contact entre l'organe de réglage et la paroi latérale du corps de vanne tend à générer des frottements qui doivent être vaincus lors de la commande en rotation de l'organe de réglage. Les frottements sont d'autant plus importants que la pression du fluide pénétrant dans le corps de vanne augmente.

Ceci nécessite par conséquent un effort important, soit manuellement, soit par l'intermédiaire d'un actionneur, lors de cette commande en rotation.

L'invention permet notamment de surmonter l'inconvénient précité.

L'invention vise en particulier à procurer une vanne de commande du type décrit dans laquelle les frottements entre l'organe de réglage et le corps de vanne sont diminués, tout en garantissant une étanchéité accrue entre eux.

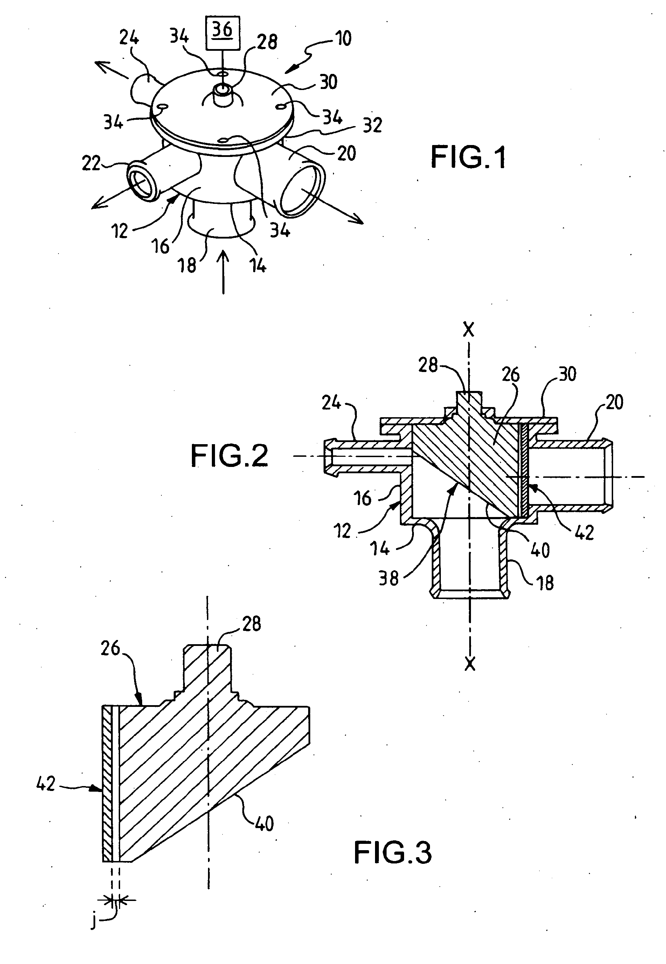

Les figures 1 et 2 montrent une vanne de commande 10 qui comprend un corps cylindrique 12 limité par une paroi de fond 14 et une paroi latérale cylindrique 16 d'axe XX. Dans la paroi de fond 14 débouche axialement une tubulure 18 d'entrée de fluide. Dans la paroi latérale cylindrique 16 débouchent trois tubulures de sortie de fluide 20, 22 et 24. Dans l'exemple, les tubulures de sorties 20, 22 et 24 débouchent radialement dans la paroi 16. Les tubulures 20 et 24 sont diamétralement opposées, tandis que la tubulure 22 forme un angle de 90° par rapport à l'axe commun des tubulures 20 et 24. En outre, les tubulures 20, 22 et 24 ont des diamètres successivement décroissants. La disposition des tubulures 20, 22 et 24 ainsi que leur diamètres ne sont donnés qu'à titre d'exemple. Il est entendu qu'un Homme de Métier saurait aisément varier la disposition et les diamètres sans pour autant affecter la portée de l'invention.

À l'intérieur du corps de vanne 12 est logé un organe de réglage 26, encore appelé organe tournant, qui est réalisé sous la forme d'un élément généralement cylindrique et qui se prolonge par une tige 28 dirigée suivant l'axe XX. Cette tige 28 passe au travers d'une ouverture centrale que comporte un couvercle 30 de forme circulaire. Ce couvercle est vissé sur une collerette 32 du corps de vanne par l'intermédiaire de quatre vis de fixation 34, avec interposition d'un joint d'étanchéité (non représenté). L'organe de réglage 26 est entraîné en rotation autour de l'axe XX par des moyens de motorisation 36 représentés schématiquement sur la figure 1.

Il peut s'agir, par exemple, d'un moteur du type pas à pas susceptible d'amener l'organe de réglage 26 dans une multiplicité de positions différentes, soit par incréments successifs, soit de manière continue.

L'organe de réglage 26 comprend une extrémité tronquée 38 constituée, dans l'exemple, par une face plane 40 formant un angle voisin de 45° avec l'axe de rotation XX. Ainsi, l'organe de réglage 26 permet de contrôler les sorties de fluide 20, 22 et 24 avec une loi définie en fonction de sa position angulaire dans le corps de vanne.

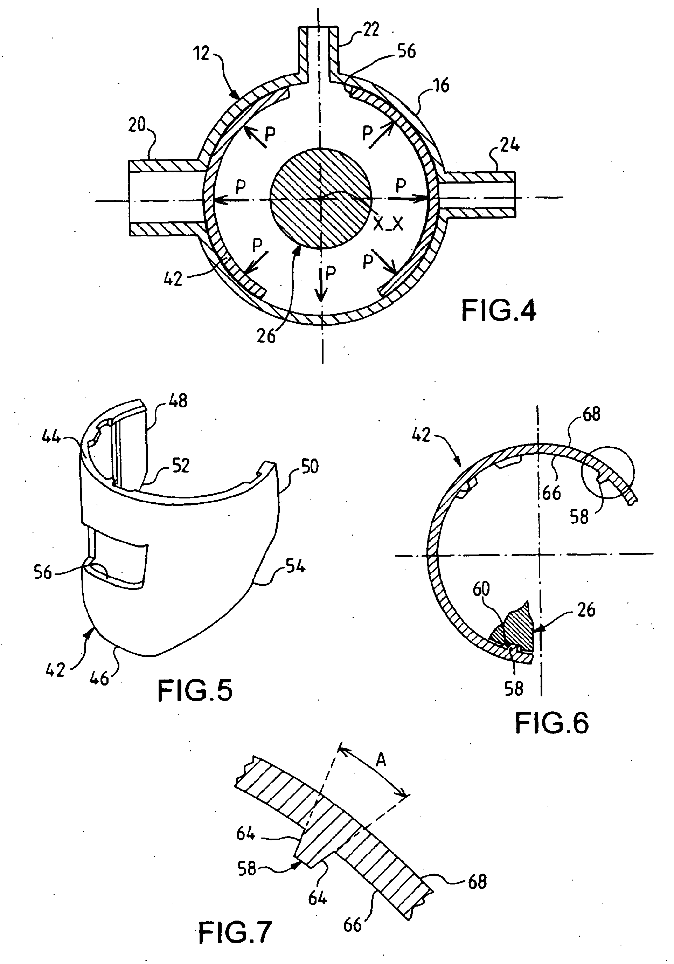

Dans un mode de réalisation préféré, l'organe de réglage 26 est entouré, sur une partie de sa périphérie, d'un segment d'étanchéité 42 en forme d'anneau ouvert, solidaire en rotation de l'organe de réglage, et propre à venir en contact étanche avec la face interne de la paroi latérale 16. Ce segment d'étanchéité, dont la forme apparaît mieux sur les figures 5 à 7, est disposé avec un faible jeu j (figure 3) autour de l'organe de réglage. Ceci permet au fluide pénétrant à l'intérieur du corps de vanne par la tubulure d'entrée 18 d'exercer une pression dirigée radialement vers l'extérieur agissant contre une surface intérieure du segment d'étanchéité 42 pour plaquer radialement une surface extérieure du segment d'étanchéité 42 contre la paroi latérale 16 en vue d'assurer une étanchéité. Cette pression est montrée par les flèches radiales P sur la figure 4. Cette figure 4 constitue un dessin schématique et, en particulier, l'organe de réglage 26 est représenté schématiquement, le jeu existant avec le segment d'étanchéité étant volontairement très exagéré.

Comme on le voit plus particulièrement sur les figures 5 et 6, le segment d'étanchéité 42, en forme d'anneau ouvert, présente une surface généralement cylindrique qui épouse la forme tronquée de l'enveloppe de l'organe de réglage 26. Le segment 42 est limité en partie supérieure par un bord 44 en arc de cercle, en partie inférieure par un bord 46 également en arc de cercle, par deux bords 48 et 50 généralement parallèles à l'axe et par des bords inclinés 52 et 54. Une découpe 56 formée dans le segment d'étanchéité 42 est en outre prévue.

Sur sa face intérieure, le segment 42 comporte une ou plusieurs nervures 58, parallèles à l'axe, destinées chacune à coopérer avec une rainure 60 également parallèle à l'axe, formée à la périphérie de l'organe de réglage (figure 6). Ceci permet au segment d'étanchéité d'être solidaire en rotation de l'organe de réglage et au fluide de pénétrer dans l'espace intercalaire compris entre l'organe de réglage et le segment d'étanchéité.

Dans l'exemple de réalisation représentée, la nervure 58, que l'on voit aussi sur le détail de la figure 7, est limitée par deux parois radiales 64 qui forment entre elles un angle A qui est ici de 30°. Les parois radiales 64 se rattachent à une face intérieure 66 du segment d'étanchéité, à l'opposé d'une face extérieure 68 (figures 6 et 7).

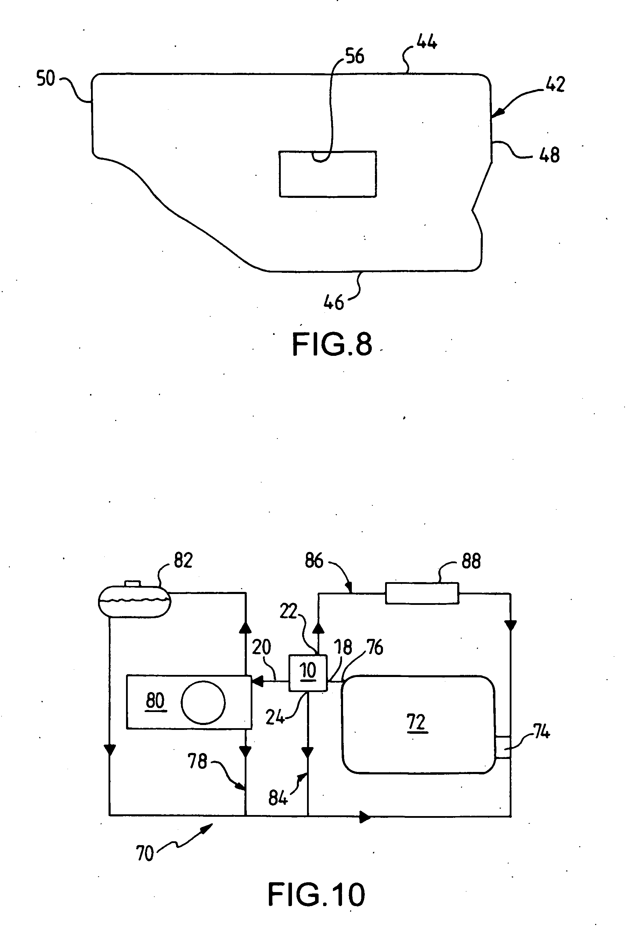

La figure 8 représente la surface développée du segment d'étanchéité 42 dans laquelle la découpe 56 forme un passage permettant à du fluide de passer dans l'une des sorties de fluide, par exemple la sortie 22, en fonction de la position angulaire du segment d'étanchéité 42.

Il est entendu que la découpe 56 est donnée ici dans un exemple de configuration, et que d'autres découpes ayant des formes différentes et/ou un/des emplacement(s) différent(s) sur le segment d'étanchéité 42 peuvent être envisagées, notamment pour tenir compte de plusieurs sorties de fluide dans la paroi latérale.

Il est entendu en outre que l'organe de réglage 26 peut comporter une ou plusieurs découpes correspondant à la ou les découpes 56 du segment d'étanchéité 42.

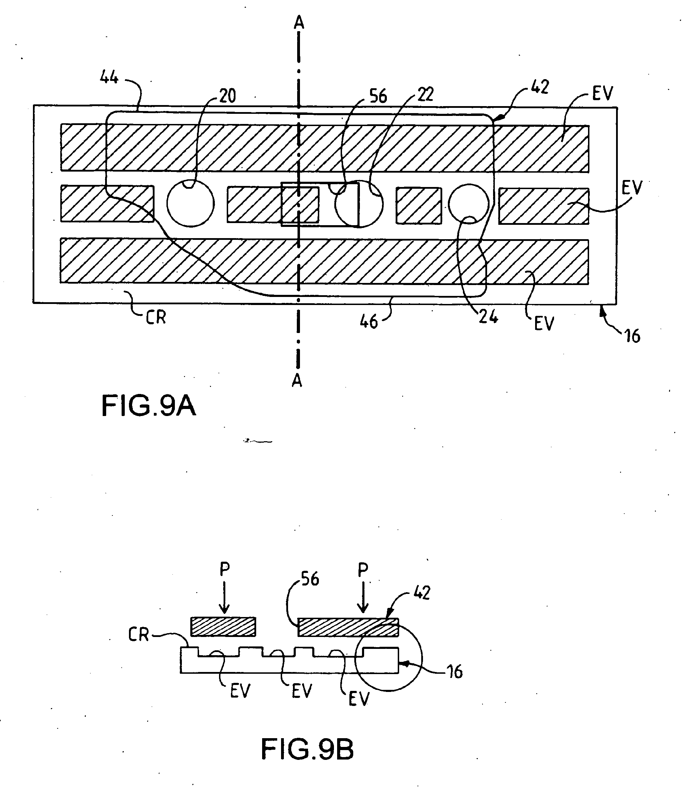

La figure 9A montre la paroi latérale 16 développée sur laquelle est représentée le segment d'étanchéité 42 en transparence pour une meilleure clarté. Le segment d'étanchéité 42 est plaqué intérieurement contre la paroi latérale 16. La variation de la position angulaire du segment d'étanchéité 42 permet d'ajuster la proportion de la découpe 56 en superposition avec la sortie de fluide 22. Dans la figure 9A, la sortie de fluide 22 est environ à moitié ouverte. Des zones évidées EV sont comprises dans la paroi latérale 16 et représentées par des surfaces hachurées dans la figure 9A. Ces zones évidées EV sont également représentées dans la figure 9B qui montre une coupe transversale de l'assemblage représenté dans la figure 9A, selon l'axe AA. Les proportions et mesures des évidements, et notamment de leur profondeur, ainsi que la distance entre la zone non-évidée CR de la paroi latérale 16 et la surface extérieure du segment d'étanchéité ont été fortement exagérées afin d'obtenir une meilleure clarté de représentation.

Lorsque la pression du fluide s'exerce sur le segment d'étanchéité 42, ce qui est représenté par les flèches P dans la figure 9B, le segment d'étanchéité 42 se plaque intérieurement contre la paroi latérale 16, et plus précisément contre des zones non-évidées CR de la paroi latérale 16. Ainsi l'ajustement de la proportion des zones non-évidées CR par rapport aux zones évidées EV permet de contrôler et de réduire la surface du segment d'étanchéité en contact avec la paroi latérale. Au final, les frottements entre le segment d'étanchéité 42 et la paroi latérale 16 sont réduits en fonction de la réduction de la surface de contact.

Le fluide peut également pénétrer dans les zones évidées EV et donc former une couche de fluide entre la paroi latérale 16 et le segment d'étanchéité 42. Étant donné que la pression du liquide dans les zones évidées EV s'ajuste à la pression P du fluide qui plaque le segment d'étanchéité 42 sur la paroi latérale 16, il en résulte une compensation de l'action de la pression P par une contre-action provenant de la pression du fluide présent dans les zones évidées EV qui mène à un équilibrage de pression autour du segment d'étanchéité 42 au niveau des zones évidées. L'équilibrage de pression au niveau des zones évidées EV permet de limiter l'effet de la pression P visant à déformer le segment d'étanchéité 42 vers l'intérieur des zones évidées sur la paroi latérale 16 aux abords des zones non-évidées CR et favorise ainsi le déplacement du segment d'étanchéité 42 par rapport à la paroi latérale 16.

Ainsi que représenté dans la figure 9A, les zones évidées EV forment des zones de forme sensiblement rectangulaire, orientées dans le sens de la longueur perpendiculairement à l'axe de rotation du segment d'étanchéité.

Avantageusement, les sorties 20, 22, 24 pratiquées dans la paroi latérale 16 sont délimitées par des zones non-évidées CR. Cela permet d'obtenir une meilleure étanchéité autour des sorties 20, 22, 24 et un contrôle précis de l'écoulement de fluide dans les sorties 20, 22, 24 lors du positionnement angulaire du segment d'étanchéité 42.

Dans le mode de réalisation représenté à la figure 9A, des zones non-évidées CR se situent sur la paroi latérale. On note, par exemple, la présence de deux bandes disposées sur toute la longueur du développé, ces bandes sont tangentes aux sorties 20, 22, 24.

Une autre zone non-évidée est présente sur le pourtour de la paroi latérale.

Deux portions de la surface extérieure du segment d'étanchéité 42, qui chacune constitue une délimitation du segment d'étanchéité 42, et se trouvent localisées respectivement à des bords opposés du segment d'étanchéité à proximité des bords 44 et 46, sont positionnés au dessus de zones non-évidées (CR) de la paroi latérale 16.

Il en résulte que, dans ces conditions, le couple de frottement entre le segment d'étanchéité et le corps de vanne est considérablement réduit par rapport au couple de frottement résultant d'une configuration sans zones évidées dans la paroi latérale de la vanne.

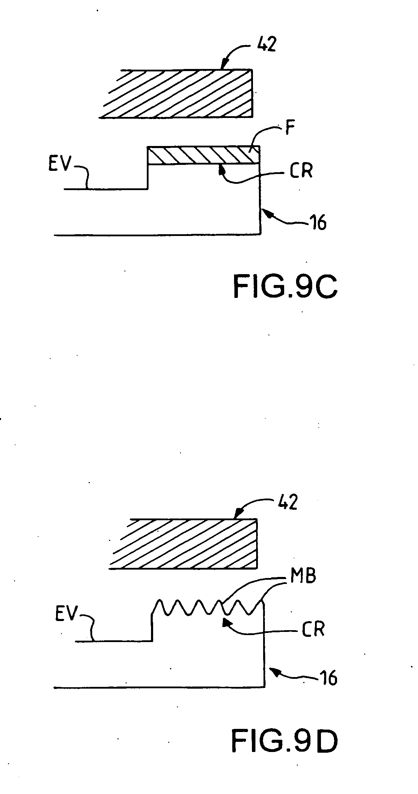

La figure 9C représente un détail à échelle agrandie de la figure 9B dans un mode de réalisation préféré de l'invention. La zone non-évidée CR de la paroi latérale 16 est couverte d'un film F en matière à faible coefficient de frottement. Le film F a une fonction de lubrifiant entre la paroi latérale 16 et le segment d'étanchéité 42. L'épaisseur du film F est fortement exagérée dans la représentation de la figure 9C. L'épaisseur varie généralement de 15 microns à 45 microns, avec une valeur habituelle de 25 microns. Un autre mode de réalisation prévoit que c'est la paroi du segment d'étanchéité 42 en vis-à-vis avec la paroi latérale 16 qui est recouverte par le film F.

Le film F peut par exemple être réalisé avec une ou plusieurs des matières suivantes : les polyamides, le polytétrafluoréthylène, le polytetrafluoroéthylène avec charge de Molybdène, l'epoxy phénolique avec charge de polytetrafluoroéthylène et graphite et le polyamide imide avec charge de polytetrafluoroéthylène. Cette liste non limitative est donnée à titre d'exemple seulement.

La figure 9D représente un détail à échelle agrandie de la figure 9B dans un mode de réalisation préféré de l'invention. La zone non-évidée CR de la paroi latérale 16 est pourvue d'un Micro Bosselage MB représenté très schématiquement dans la figure 9D. Le Micro Bosselage MB permet à un film de fluide (non représenté dans la figure 9D) de s'installer entre la paroi latérale 16 et le segment d'étanchéité 42. Ce film de fluide présente l'avantage de réduire encore les frottements entre la paroi latérale 16 et le segment d'étanchéité sans pour autant causer de fuite de fluide.

Il est entendu qu'un homme du métier saura combiner les modes de réalisation décrits pour les figures 9C et 9D dans différentes combinaisons dans le cadre de la présente invention. Ainsi il est possible de réaliser un micro bosselage et de revêtir le micro bosselage d'un film d'une ou plusieurs matières telles qu'énumérée dans la description de la figure 9C. Ainsi par exemple, les surfaces des zones non-évidées CR peuvent être microbosselées et recouvertes d'un film de polytétrafluoréthylène avec charge de Molydbène.

Dans un autre mode de réalisation préféré de l'invention, aucun segment d'étanchéité n'entoure l'organe de réglage 26 au niveau de sa périphérie. On peut alors figurer l'organe de réglage 26 comme dans la figure 3, dans laquelle on supprime le segment d'étanchéité 42.

Dans encore un autre mode de réalisation de l'invention, l'organe de réglage comprend des zones évidées au niveau de sa périphérie. La périphérie développée peut alors avoir une forme ressemblant à celle du segment d'étanchéité précédemment décrit à la figure 8. Il est envisageable dans une telle configuration de l'organe de réglage, que la paroi latérale contre laquelle vient se plaquer la périphérie de l'organe de réglage, soit alors sans zones évidées EV, la réduction des surfaces en contact étant alors effectivement obtenue grâce aux zones évidées alors prévues sur le segment d'étanchéité. Il en résulte que le couple de frottement entre l'organe de réglage et le corps de vanne est considérablement réduit par rapport au couple de frottement résultant d'une configuration sans zones évidées dans l'organe de réglage. On pourra alors en plus prévoir que les zones non évidées de la paroi du segment d'étanchéité en vis-à-vis avec la paroi latérale et/ou la paroi latérale seront recouvertes par un film ayant une fonction de lubrifiant tel que décrit auparavant.

Les zones évidées EV peuvent former des zones de forme allongées orientées dans le sens de la longueur, dont les bords dans le sens de la longueur sont parallèles entre eux, et les bords dans le sens de la largeur sont parallèles au bord le plus proche de la périphérie de l'organe de réglage.

Dans les modes de réalisation décrits de l'invention, il est possible, toutes choses égales par ailleurs, d'utiliser des moyens de motorisation 36 de plus faible puissance que dans l'art antérieur, et cela sans compromettre les caractéristiques d'étanchéité.

La vanne de l'invention trouve une application particulière dans le domaine des véhicules automobiles. La figure 10 montre un circuit 70 pour le refroidissement d'un moteur thermique 72 de véhicule automobile. Le circuit 70 est parcouru par un fluide de refroidissement, habituellement de l'eau additionnée d'un anti-gel, qui circule sous l'action d'une pompe 74. Le fluide échauffé par le moteur, quitte ce dernier par une sortie 76 qui est reliée à la tubulure d'entrée 18 d'une vanne de commande 10 du type décrit précédemment. Cette vanne comprend trois tubulures de sortie 20, 22 et 24 qui sont reliées à trois branches du circuit.

Ce circuit comprend une première branche 78 qui contient un radiateur de refroidissement 80 et un vase d'expansion 82, une deuxième branche 84 qui forme une dérivation du radiateur de refroidissement 80 et du vase d'expansion 82, ainsi qu'une troisième branche 86 qui contient un aérotherme 88 servant au chauffage de l'habitacle du véhicule.

La tubulure 20 est reliée à la branche 78 (radiateur), la tubulure 22 est reliée à la branche 86 (aérotherme) et la tubulure 24 à la branche 84 (dérivation). La vanne permet ainsi de gérer indépendamment les débits de fluide dans les trois branches précitées du circuit, afin d'optimiser la température du moteur thermique et le chauffage de l'habitacle.

Bien entendu, l'invention n'est pas limitée à la forme de réalisation telle que décrite précédemment et s'applique à d'autres variantes. Ainsi, la forme de révolution définie par le corps de vanne n'est pas nécessairement cylindrique et pourrait, par exemple, être conique ou tronconique. Le nombre et la disposition mutuelle des tubulures de sortie est susceptible aussi de nombreuses variantes en fonction des applications considérées.

De manière générale, la vanne de l'invention trouve une application particulière au domaine de l'industrie automobile.

## Revendications

1. Vanne de commande pour un circuit de circulation de fluide, comprenant un corps (12) et un organe de réglage (26), ledit corps (12) étant muni d'une entrée de fluide (18) et d'au moins deux sorties de fluide (20, 22, 24) et délimitant un logement de révolution pour ledit organe de réglage (26) propre à tourner autour d'un axe de rotation (XX) et à prendre différentes positions angulaires pour contrôler la distribution du fluide au travers des sorties, le corps (12) comprenant au moins une paroi latérale (16), ladite paroi latérale (16) présentant en développé une longueur donnée,
**caractérisé en ce que** la paroi latérale (16) comprend des zones évidées (EV) et des zones non-évidées (CR), les zones évidées (EV) permettant de réduire une surface de l'organe de réglage en contact avec la paroi latérale (16) et au moins une zone non-évidée étant présente sur toute la longueur dudit développé.

2. Vanne de commande selon la revendication 1, dans laquelle l'organe de réglage est constitué de 2 parties et dont une des deux parties est un segment d'étanchéité (42) en forme d'anneau ouvert, qui a une surface intérieure et une surface extérieure, qui est solidaire en rotation de l'organe de réglage (26) et qui est agencé avec un faible jeu (j) autour de l'organe de réglage, ce qui permet au segment d'étanchéité d'être plaqué intérieurement contre la paroi latérale (16) en vue d'assurer une étanchéité sous l'action de la pression (P) du fluide.

3. Vanne de commande selon la revendication 1 ou 2, dans laquelle lesdites zones évidées (EV) et lesdites zones non-évidées (CR) sont situées sur une face interne de ladite paroi latérale (16).

4. Vanne de commande selon la revendication 3, dans laquelle une zone non-évidée (CR) de la paroi latérale (16) en contact avec la surface du segment d'étanchéité (42) est pourvue d'un micro bosselage (MB) permettant une installation d'un film de fluide entre le segment d'étanchéité (42) et la zone non-évidée (CR) de la paroi latérale (16) en contact avec la surface du segment d'étanchéité.

5. Vanne de commande selon l'une des revendications 2 à 4, dans laquelle une zone non-évidée (CR) de la paroi latérale (16) en contact avec la surface du segment d'étanchéité (42) est couverte d'un film (F) en matière à faible coefficient de frottement.

6. Vanne de commande selon la revendication 5, dans laquelle la matière à faible coefficient de frottement est choisie parmi le groupe comprenant les polyamides, le polytétrafluoréthylène, le polytetrafluoroéthylène avec charge de Molybdène, l'epoxy phénolique avec charge de polytetrafluoroéthylène et graphite et le polyamide imide avec charge de polytetrafluoroéthylène.

7. Vanne de commande selon l'une des revendications 1 à 6, dans laquelle les sorties de fluide (20, 22, 24) pratiquées dans la paroi latérale (16) sont délimitées par des zones (CR) non-évidées.

8. Vanne de commande selon la revendication 2, dans laquelle l'organe de réglage (26) et le segment d'étanchéité (42) comportent des reliefs (58, 60) de forme conjuguée pour permettre leur solidarisation en rotation.

9. Vanne de commande selon l'une des revendications 2 à 6 ou 8, dans laquelle la paroi latérale (16) du corps de vanne délimite un logement cylindrique, et la surface extérieure du segment d'étanchéité (42) est une surface extérieure cylindrique.

10. Vanne de commande selon l'une des revendications 1 à 9, dans laquelle l'entrée de fluide (18) débouche axialement dans une paroi de fond (14) dudit corps de vanne, et les sorties de fluide (20, 22, 24) débouchent radialement dans la paroi latérale (16) du corps de vanne.

11. Vanne de commande selon l'une des revendications 1 à 10, dans laquelle les zones évidées (EV) forment des zones de forme sensiblement rectangulaire.

12. Vanne de commande selon l'une des revendications 2 à 6, 8 ou 9, dans laquelle deux portions de la surface extérieure du segment d'étanchéité (42) sont positionnées au dessus de zones non-évidées (CR) de la paroi latérale 16, chaque portion constituant une délimitation du segment d'étanchéité (42), et les portions se trouvant localisées respectivement à des bords opposés du segment d'étanchéité.

13. Circuit de circulation de fluide, **caractérisé en ce qu'**il comprend une vanne de commande selon l'une des revendications 1 à 11, dont l'entrée de fluide (18) est reliée à une source de fluide (76) et dont les sorties de fluide (20, 22, 24) sont reliées respectivement à des branches (78, 86, 84) du circuit.

14. Circuit de circulation de fluide selon la revendication 13, **caractérisé en ce qu'**il est réalisé sous la forme d'un circuit de refroidissement (70) d'un moteur thermique (72) de véhicule automobile, qui est parcouru par un fluide de refroidissement sous l'action d'une pompe de circulation (74), et **en ce que** la vanne de commande (10) est une vanne à trois voies dont l'entrée de fluide (18) est reliée à une arrivée (76) de fluide de refroidissement en provenance du moteur (72) et dont les trois sorties de fluide (20, 22, 24) sont reliées respectivement à une première branche (78) du circuit qui contient un radiateur de refroidissement (80), à une deuxième branche (84) du circuit qui constitue une 10 dérivation du radiateur de refroidissement (80), et à une troisième branche (86) du circuit qui contient un aérotherme (88) pour le chauffage de l'habitacle.

## Claims

1. Control valve for a fluid flow circuit, comprising a body (12) and a modulating member (26), said body (12) having a fluid inlet (18) and at least two fluid outlets (20, 22, 24) and defining an axisymmetric housing for said modulating member (26) capable of rotating about an axis of rotation (XX) and adopting different angular positions to control the distribution of the fluid through the outlets, the body (12) comprising at least one side wall (16) whose developed form has a given length,
**said valve being characterized in that** the side wall (16) comprises sunken areas (EV) and non-sunken areas (CR), the sunken areas (EV) serving to reduce the surface area of the modulating member in contact with the side wall (16) and at least one non-sunken area being present throughout the length of said developed form.

2. Control valve according to Claim 1, in which the modulating member is made up of two parts, one of which two parts is a part-annular seal (42) in the shape of an open ring, which has an inside surface and an outside surface, is coupled in rotation to the modulating member (26), and is mounted with a small clearance (j) about the modulating member, so that the part-annular seal can be pressed against the inside of the side wall (16) so that the pressure (P) of the fluid has a sealing action.

3. Control valve according to Claim 1 or 2, in which said sunken areas (EV) and said non-sunken areas (CR) are located on an inside face of said side wall (16).

4. Control valve according to Claim 3, in which a non-sunken area (CR) of the side wall (16) in contact with the surface of the part-annular seal (42) is provided with microembossing (MB) to allow a fluid film to be created between the part-annular seal (42) and the non-sunken area (CR) of the side wall (16) in contact with the surface of the part-annular seal.

5. Control valve according to one of Claims 2 to 4, in which a non-sunken area (CR) of the side wall (16) in contact with the surface of the part-annular seal (42) is covered by a film (F) of low-friction material.

6. Control valve according to Claim 5, in which the low-friction material is chosen from the group comprising polyamides, polytetrafluoroethylene, polytetrafluoroethylene filled with molybdenum, epoxy phenolic resin filled with polytetrafluoroethylene and graphite, and polyamideimide filled with polytetrafluoroethylene.

7. Control valve according to one of Claims 1 to 6, in which the fluid outlets (20, 22, 24) formed in the side wall (16) are defined by non-sunken areas (CR).

8. Control valve according to Claim 2, in which the modulating member (26) and the part-annular seal (42) have reliefs (58, 60) of mating shapes to enable them to be coupled in rotation.

9. Control valve according to one of Claims 2 to 6 or 8, in which the side wall (16) of the valve body defines a cylindrical housing, and the outside surface of the part-annular seal (42) is a cylindrical outside surface.

10. Control valve according to one of Claims 1 to 9, in which the fluid inlet (18) opens axially into an end wall (14) of said valve body, and the fluid outlets (20, 22, 24) open radially into the side wall (16) of the valve body.

11. Control valve according to one of Claims 1 to 10, in which the sunken areas (EV) form essentially rectangular areas.

12. Control valve according to one of Claims 2 to 6, 8 or 9, in which two portions of the outside surface of the part-annular seal (42) are positioned above non-sunken areas (CR) of the side wall 16, each portion forming a boundary to the part-annular seal (42), and the portions being located at respective opposite edges of the part-annular seal.

13. Fluid flow circuit **characterized in that** it comprises a control valve according to one of Claims 1 to 11, in which the fluid inlet (18) is connected to a fluid source (76) and in which the fluid outlets (20, 22, 24) are connected to respective lines (78, 86, 84) of the circuit.

14. Fluid flow circuit according to Claim 13, **characterized in that** it is constructed in the form of a cooling circuit (70) for a motor vehicle heat engine (72) through which a coolant is pumped by a circulating pump (74), and **in that** the control valve (10) is a three-way valve whose fluid inlet (18) is connected to an intake (76) of coolant from the engine (72) and whose three fluid outlets (20, 22, 24) are connected respectively to a first circuit line (78) containing a cooling radiator (80), to a second circuit line (84) forming a branch of the cooling radiator (80), and to a third circuit line (86) containing an air heater (88) for heating the passenger compartment.

## Patentansprüche

1. Steuerschieber für einen Fluidzirkulationskreis, der einen Körper (12) und ein Einstellorgan (26) enthält, wobei der Körper (12) mit einem Fluideinlass (18) und mit wenigstens zwei Fluidauslässen (20, 22, 24) versehen ist und einen rotationssymmetrischen Aufnahmesitz für das Einstellorgan (26) begrenzt, das sich um eine Drehachse (XX) drehen und verschiedene Winkelpositionen einnehmen kann, um die Verteilung von Fluid auf die Auslässe zu steuern, wobei der Körper (12) wenigstens eine Seitenwand (16) enthält, wobei die Seitenwand (16) in der Abwicklung einen gegebene Länge aufweist,
**dadurch gekennzeichnet, dass** die Seitenwand (16) ausgesparte Zonen (EV) und nicht ausgesparte Zonen (CR) enthält, wobei die ausgesparten Zonen (EV) ermöglichen, eine Oberfläche des Einstellorgans, die mit der Seitenwand (16) in Kontakt ist, zu verkleinern, und wobei wenigstens eine nicht ausgesparte Zone auf der gesamten Länge der Abwicklung vorhanden ist.

2. Steuerschieber nach Anspruch 1, wobei das Einstellorgan aus zwei Teilen gebildet ist, wovon einer ein Dichtungssegment (42) in Form eines offenen Rings ist, der eine innere Oberfläche und eine äußere Oberfläche besitzt, der mit dem Einstellorgan (26) drehfest verbunden ist und der mit einem geringen Spiel (j) um das Einstellorgan angeordnet ist, was dem Dichtungssegment ermöglicht, innen gegen die Seitenwand (16) zu drücken, um eine Dichtigkeit unter der Wirkung des Drucks (P) des Fluids sicherzustellen.

3. Steuerschieber nach Anspruch 1 oder 2, wobei sich die ausgesparten Zonen (EV) und die nicht ausgesparten Zonen (CR) auf einer inneren Fläche der Seitenwand (16) befinden.

4. Steuerschieber nach Anspruch 3, wobei eine nicht ausgesparte Zone (CR) der Seitenwand (16), die mit der Oberfläche des Dichtungssegments (42) in Kontakt ist, mit einer Mikrohämmerung (MB) versehen ist, die eine Ausbildung eines Fluidfilms zwischen dem Dichtungssegment (42) und der nicht ausgesparten Zone (CR) der Seitenwand (16), die mit der Oberfläche des Dichtungssegments in Kontakt ist, ermöglicht.

5. Steuerschieber nach einem der Ansprüche 2 bis 4, wobei eine nicht ausgesparte Zone (CR) der Seitenwand (16), die mit der Oberfläche des Dichtungssegments (42) in Kontakt ist, mit einer dünnen Schicht (F) aus einem Material mit geringem Reibkoeffizienten bedeckt ist.

6. Steuerschieber nach Anspruch 5, wobei das Material mit geringem Reibkoeffizienten aus der Gruppe gewählt ist, die Polyamide, Polytetrafluorethylen, Polytetrafluorethylen mit Molybd-Gehalt, Phenolepoxid mit Polytetrafluorethylen- und Graphit-Gehalt und Polyamidimid mit Polytetrafluorethylen-Gehalt enthält.

7. Steuerschieber nach einem der Ansprüche 1 bis 6, wobei die Fluidauslässe (20, 22, 24), die in der Seitenwand (16) ausgebildet sind, durch nicht ausgesparte Zonen (CR) begrenzt sind.

8. Steuerschieber nach Anspruch 2, wobei das Einstellorgan (26) und das Dichtungssegment (42) Reliefs (58, 60) mit komplementären Formen aufweisen, um ihre drehfeste Befestigung zu ermöglichen.

9. Steuerschieber nach einem der Ansprüche 2 bis 6 oder 8, wobei die Seitenwand (16) des Schieberkörpers einen zylindrischen Aufnahmesitz begrenzt und die äußere Oberfläche des Dichtungssegments (42) eine zylindrische äußere Oberfläche ist.

10. Steuerschieber nach einem der Ansprüche 1 bis 9, wobei der Fluideinlass (18) axial in eine Bodenwand (14) des Schieberkörpers mündet und die Fluidauslässe (20, 22, 24) radial in die Seitenwand (16) des Schieberkörpers münden.

11. Steuerschieber nach einem der Ansprüche 1 bis 10, wobei die ausgesparten Zonen (EV) Zonen mit im Wesentlichen rechtwinkliger Form bilden.

12. Steuerschieber nach einem der Ansprüche 2 bis 6, 8 oder 9, wobei zwei Abschnitte der äußeren Oberfläche des Dichtungssegments (42) über nicht ausgesparten Zonen (CR) der Seitenwand (16) positioniert sind, wobei jeder Abschnitt eine Begrenzung des Dichtungssegments (42) bildet und wobei sich die Abschnitte jeweils an gegenüberliegenden Rändern des Dichtungssegments befinden.

13. Fluidzirkulationskreis, **dadurch gekennzeichnet, dass** er einen Steuerschieber nach einem der Ansprüche 1 bis 11 enthält, dessen Fluideinlass (18) mit einer Fluidquelle (76) verbunden ist und dessen Fluidauslässe (20, 22, 24) jeweils mit Zweigen (78, 86, 84) des Kreises verbunden sind.

14. Fluidzirkulationskreis nach Anspruch 13, **dadurch gekennzeichnet, dass** er in Form eines Kühlkreises (70) einer Brennkraftmaschine (72) eines Kraftfahrzeugs verwirklicht ist und der unter der Wirkung einer Umwälzpumpe (74) von einem Kühlungsfluid durchströmt wird, und dass der Steuerschieber (10) ein Dreiwege-Schieber ist, dessen Fluideinlass (18) mit einer Kühlungsfluidzuführung (76) von der Maschine (72) verbunden ist und dessen drei Fluidauslässe (20, 22, 24) mit einem ersten Zweig (78) des Kreises, der einen Kühler (80) enthält, bzw. mit einem zweiten Zweig (84) des Kreises, der eine Abzweigung des Kühlers (80) bildet, bzw. mit einem dritten Zweig (86) des Kreises, der einen Thermoblock (88) für die Heizung des Fahrgastraums enthält, verbunden sind.
